# EUROPEAN PATENT SPECIFICATION

(11) **EP 1 385 645 B1**
(45) Date of publication and mention of the grant of the patent: **14.06.2006**
(21) Application number: 02735302.8
(22) Date of filing: 25.04.2002
(51) Int. Cl.: B09C 1/00

(54) **PROCESS FOR THE REMOVAL OF ORGANIC POLLUTANTS FROM SEDIMENTS**
VERFAHREN ZUM ABTRENNEN ORGANISCHER VERUNREINIGUNGEN VON SEDIMENTEN
PROCEDE D'ELIMINATION DE POLLUANTS ORGANIQUES A PARTIR DE SEDIMENTS

(30) Priority: 10.05.2001 IT MI20010095
(43) Date of publication of application: 04.02.2004
(73) Proprietor: ENITECNOLOGIE S.p.A., 20097 S. Donato Milanese (Milano) (IT)
(72) Inventor: D'ANGELI, Edoardo, I-00172 Rome (IT); NARDELLA, Alessandro, I-00199 Rome (IT); PAPPA, Rosario, I-00015 Monterotondo (IT); SISTO, Raffaello, I-00146 Rome (IT)
(74) Representative: De Gregori, Antonella
(86) International application number: PCT/EP2002/004579
(87) International publication number: WO 2002/090010

(56) References cited:
- EP-A- 0 934 780
- EP-A- 1 083 296
- US-A- 5 585 002

## Description

The present invention relates to a remediation process of sediments polluted by organic compounds.

More specifically, the present invention relates to a process for the removal of organic pollutants from sediments characterized by a water content ranging from 5% to the saturation of the sediment and with a prevalently fine particle-size content (<63 µm), which uses, as extractant, a lipophile solvent or a mixture thereof with a hydrophile cosolvent.

The continuous dredging of harbour and lagoon areas, indispensable for maintaining the navigability of waterways and for preventing flooding due to the silting up of river mouths, causes a production of sediments, most of which are contaminated by industrial and civil waste, navigation and port activities.

According to the regulations in force, the resulting material can be discharged into the open sea, used as fillers, if inert, or, if classified as dangerous, it must be disposed of in dumps.

In order to satisfy the demand for reducing the use of dumps, in more advanced countries (USA and Northern Europe) the development of on-site or ex situ treatment processes which declassify contaminated sediments to inert products and in some cases provide for their distribution, is continually growing.

The technologies generally adopted for the treatment of sediments are: soil washing, bioremediation and solidification/stabilization.

The term soil-washing refers to washing techniques which use water, optionally containing surfactants.

Soil washing exploits the tendency of pollutants to bind themselves, either chemically or physically, to the finer particles of the sediment. These particles can be separated from the rest of the matrix by means of a more or less complex series of separation operations based on differences in dimensions, density and surface properties. With this technology the separation is obtained of a fine polluted fraction and a coarse decontaminated fraction.

The finer particles thus separated, only represent a small fraction of the initial polluted volume, but contain most of the pollutants.

Soil washing is an emerging technology adopted in numerous harbour situations in Northern Europe (Rotterdam, Hamburg) for reducing the quantity of toxic material to be deposited in dumps and recovering part of the treatment costs by the selling of the coarser fraction produced as building material.

This process however has substantial disadvantages deriving from the necessity of operating with large volumes of extracting agent and the difficulty of recovering the additives used.

Furthermore, these techniques are difficult to apply to matrixes with a prevalently fine particle-size (<63 µm).

Biological remediation techniques are limited to biodegradable compounds and non-toxic concentrations and are greatly jeopardized by the long times necessary for completing the remediation.

Solidification/stabilization processes consist in adding a hydraulic ligand to the sediment, for example Portland cement. In this way the pollutants are physically blocked inside the cementitious matrix and can no longer migrate into the surrounding environment.

In some processes, in addition to cement, specific additives are added, capable of reacting with the pollutants transforming them into less toxic or less mobile species.

This type of technology has the disadvantage of producing an increase in the volume of the material treated (sediment + ligand) and, in any case, does not guarantee the stability of the end-product over a period of time.

Treatment processes based on extraction with a solvent selected, for example, from methylene chloride, liquefied C₂-C₄ hydrocarbons, or supercritical fluids, are also known in the art.

The applicability and efficiency of these processes however is greatly limited by the presence of high percentages of fine particles and by the high water content which generally characterize the sediments.

Document EP-A-934780 discloses a process for the removal of organic pollutants from sediments (cf. par. 2) containing water up to the saturation limit of the sediment (cf. par. 9) comprising the steps of: (a) mixing said sediment with a lipophile solvent (ethyl acetate) (cf. par. 9, item (a)), (b) separation of the liquid phase from the solid phase (cf. par. 9, item (b); col. 2, line 16-20), (c) removal by evaporation of the residual solvent from the solid phase obtained in step (b) (cf. par. 9, item (c); col. 2, line 20-24) and (d) recovery by evaporation of the solvent from the liquid phase obtained in step (b) (cf. par. 9, item (d); col. 2, line 24-30).

It has now been found that it is possible to overcome the drawbacks mentioned above by means of a process which uses, as extractant, a lipophile solvent.

The use of the lipophile solvent alone allows high removal efficiencies to be obtained, regardless of the content of water and fine particles present in the sediment, thanks to the fact that the fine particles remain aggregated among each other. The liquid-solid separation therefore takes place by simple sedimentation.

In accordance with this, an objective of the present invention relates to a process for the removal of organic pollutants from sediments characterized by a water content ranging from 5% to the saturation of the sediment and consisting of over 60%, with respect to the dry product, of particles with a particle-size lower than 63 µm, comprising the following steps:
(a) mixing of said sediment with a lipophile solvent selected from petroleum ether and ethyl acetate, said solvent being mixed in such a ratio as to form a single liquid phase with the water contained in the sediment;
(b) separation of the liquid phase from the solid phase;
(c) removal by evaporation of the residual solvent from the solid phase obtained in step (b);
(d) recovery by evaporation of the solvent from the liquid phase obtained in step (b).

The sediments used in the process according to the present invention typically have a water content ranging from 20 to 70% by weight.

In step (a), the weight ratio sediment/solvent or solvent-cosolvent mixture ranges from 0.2 to 5.0, preferably from 0.5 to 1. This step is generally carried out at room temperature, for a time ranging from 10 to 120 minutes.

The solvents used in the process according to the present invention are non-toxic (a small part of them however remains in the sediment treated) and volatile (consequently easily removable from the sediment), inexpensive and easily available.

Among lipophile solvents, ethyl acetate is preferred for the purposes of the invention.

Steps (a) to (d) of the process according to the present invention can be repeated several times if necessary.

When a lipophile solvent is used, in step (b) of the process of the present invention, the separation of the liquid phase from the solid phase takes place instantly after the mixing has been stopped, due to the fact that the fine fraction of the sediment is kept agglomerated by the water and does not pass, except for a minimum part, into the extraction solvent.

In this way, a purified sediment from pollutants is obtained, consisting of both the coarse fraction and the fine fraction, and a liquid fraction (solvent) containing the pollutants.

In step (c) of the process according to the present invention, the solid phase is heated to a temperature selected so as to allow the recovery of the residual extraction solvent, which can be recycled to step (a) of the process according to the present invention.

A temperature ranging from 60 to 100°C, preferably from 70 to 90°C is preferably used.

The operation can be carried out using a rotating drum drier, a screen drier or other devices of the commercial type.

The recovery of the exhausted solvent (step d) can be effected using a fine film evaporator with scraped walls operating at atmospheric pressure or under slight depression. In this way, a boiler residue is obtained, containing the fraction extracted from the sediment and a fraction at the head consisting of the extraction solvent, which can be recycled to step (a) of the process according to the invention.

The process according to the present invention allows the toxicity of a sediment with high water contents and fine particles, to be reduced in a simple and economic way.

The following examples are provided for a better understanding of the invention and should not be considered as limiting its scope in any way.

### EXAMPLE 1

In the experimentation, a sediment polluted by chlorinated aromatic and aliphatic hydrocarbons is used, having the following characteristics:
- 70% of fine particles (fraction <63 µm);
- 61% of humidity;
- total organic contaminants: 12786 mg/kg of dry product (determination by gaschromatography)

100 g of this sediment are introduced into a rotating cylinder together with 100 g of ethyl acetate and maintained under stirring, at room temperature, for 30 minutes.

After the mixture has been left to settle for 5 minutes, the liquid phase is filtered on a Teflon filter with 0.45 µm holes, in order to determine by weighing the fine fraction of the sediment entrained by the solvent.

The ethyl acetate is recovered from the liquid fraction by distillation in a rotating evaporator at 90°C.

96 g of solvent are recovered, which with the addition of 4 g of fresh ethyl acetate are used for a second washing cycle of the sediment.

The sediment recovered after extraction with the solvent is dried in the air for 24 hours and is then analyzed to determine the concentration of organic contaminants.

Table 1 indicates the residual concentration values of pollutant in the sediment after each washing cycle.

The last column on the right indicates the removal efficiencies (R) for each pollutant relating to the sediment discharged from the last cycle. The total removal efficiency for each cycle is indicated in the last line.

From the data specified in the table it can be observed that the treatment is capable of removing over 99% of the organic contaminants present in the sediment.

The total content of fine particles entrained by the solvent leaving each step is equal to 0.03% with respect to the solvent itself. This value is particularly important considering the predominant presence of fine material (<63 µm) in the sample treated.

The overall quantity of solvent recovered is equal to 96% of the initial quantity.

**TABLE 1**

| Compound | as such | I step | II step | III step | R, III step |
|---|---|---|---|---|---|
| | mg/kg in the dry sediment | | | | % |
| Tetrachloroethylene | 527 | ND | ND | ND | > 99.9 |
| Tetrachloroethane | 224 | ND | ND | ND | > 99.9 |
| Hexachloroethane | 582 | ND | ND | ND | > 99.9 |
| Tetrachlorobutene iso | 195 | ND | ND | ND | > 99.9 |
| Tetrachlorobutene iso | 205 | ND | ND | ND | > 99.9 |
| Tetrachlorobutadiene | 992 | 4.8 | ND | ND | > 99.9 |
| Pentachlorobutadiene iso | 243 | ND | ND | ND | > 99.9 |
| Pentachlorobutadiene iso | 1689 | 6.1 | 2.9 | ND | > 99.9 |
| Hexachlorobutadiene | 2340 | 14.0 | 7.5 | 4.1 | 99.8 |
| Pentachlorobutene iso | 746 | 4.1 | 5.8 | 3.9 | 99.5 |
| Pentachlorobutene iso | 4718 | 32.0 | 47.9 | 32.8 | 99.3 |
| Hexachlorobenzene | 325 | 12.1 | 19.8 | 13.9 | 95.7 |
| TOTAL | 12786 | 73.1 | 83.8 | 54.5 | 99.6 |
| Total removal (%) | - | 99.4 | 99.3 | 99.6 | |

| | | | | | |
|---|---|---|---|---|---|
| ND: not determinable | | | | | |

### EXAMPLE 2

The same procedure is adopted as described in Example 1, with the difference that a 500 cc glass flask was used as mixing reactor together with a mechanical stirrer.

Table 2 indicates the removal results obtained with 4 extraction steps.

**TABLE 2**

| Compound | as such | IV step | R |
|---|---|---|---|
| | mg/kg | | % |
| Tetrachloroethylene | 527 | ND | > 99.9 |
| Tetrachloroethane | 224 | ND | > 99.9 |
| Hexachloroethane | 582 | ND | > 99.9 |
| Tetrachlorobutene iso | 195 | 3.7 | > 98.1 |
| Tetrachlorobutene iso | 205 | ND | > 99.9 |
| Tetrachlorobutadiene | 992 | 13.0 | > 98.7 |
| Pentachlorobutadiene iso | 243 | ND | > 99.9 |
| Pentachlorobutadiene iso | 1689 | 18.6 | > 98.9 |
| Hexachlorobutadiene | 2340 | 28.6 | 98.8 |
| Pentachlorobutene iso | 746 | 9.4 | 98.7 |
| Pentachlorobutene iso | 4718 | 63.3 | 98.7 |
| Hexachlorobenzene | 325 | 21.5 | 93.4 |
| TOTAL | 12786 | 157.9 | 98.8 |

| | | | |
|---|---|---|---|
| ND: not determinable | | | |

The treatment is capable of removing over 98% of the organic contaminants present.

The total quantity of solvent recovered at the end of the extraction cycles proved to be 97% with respect to the quantity charged. The content of fine particles entrained is equal to 0.03%.

### EXAMPLE 3 (not according to the present invention)

500 g of sediment characterized by 70% of fine particles (fraction <63 µm) and 44% of humidity, polluted by aromatic polycyclic hydrocarbons, are put in contact with 500 g of a mixture of ethyl acetate and acetone in a ratio of 48/52, for 120 minutes, at room temperature. As a result of the contamination homogeneity of the sample, the separation of the coarse fraction (>63 µm) was not effected.

At the end of the first two extraction steps, the solid/liquid separation was carried out by decanting, after the subsequent 3 steps, it was effected by centrifugation at 700 x g for 10 minutes.

Table 3 indicates the removal results obtained with 5 extraction steps.

**TABLE 3**

| Compound | as such | V step | R |
|---|---|---|---|
| | mg/kg | | % |
| Acenaphthene | 2.7 | < 0.1 | > 96 |
| Acenaphthylene | 1.8 | 0.2 | 89 |
| Anthracene | 4 | 0.1 | 98 |
| Benzo[a]anthracene | 1.6 | ND | > 99 |
| Benzo[a]pyrene | 2.1 | ND | > 99 |
| Benzo[b]fluoranthene + Benzo[k] fluoranthene | 3 | ND | > 99 |
| Benzo[g,h,i]perylene | 2.1 | ND | > 99 |
| Indeno[1,2,3,c,d]perylene | 1.2 | ND | > 99 |
| Chrysene | 1.8 | ND | > 99 |
| Dibenzo[a,h]anthracene | 0.2 | ND | > 99 |
| Fluoranthene | 12.3 | 0.2 | 98 |
| Fluorene | 2.6 | < 0.1 | > 96 |
| Naphthalene | 87.5 | 0.7 | 99 |
| Phenanthrene | 12.3 | 0.2 | 98 |
| Pyrene | 15.9 | 0.2 | 99 |
| TOTAL | 151.1 | < 1.8 | > 99 |

| | | | |
|---|---|---|---|
| ND = not determinable | | | |

The treatment is capable of removing over 99% of the organic contaminants present.

### EXAMPLE 4 (not according to the present invention)

An extraction test was effected as described in Example 3, with the difference that there were 8 extraction steps instead of 5. The results are indicated in Table 4.

**TABLE 4**

| Compound | as such | VIII step | R |
|---|---|---|---|
| | mg/kg | | % |
| Acenaphthene | 2.7 | < 0.1 | > 96 |
| Acenaphthylene | 1.8 | < 0.1 | > 94 |
| Anthracene | 4 | < 0.1 | > 98 |
| Benzo[a]anthracene | 1.6 | ND | > 99 |
| Benzo[a]pyrene | 2.1 | ND | > 99 |
| Benzo[b]fluoranthene + Benzo[k] fluoranthene | 3 | ND | > 99 |
| Benzo[g,h,i]perylene | 2.1 | ND | > 99 |
| Indeno[1,2,3,c,d]perylene | 1.2 | ND | > 99 |
| Chrysene | 1.8 | ND | > 99 |
| Dibenzo[a,h]anthracene | 0.2 | ND | > 99 |
| Fluoranthene | 12.3 | < 0.1 | > 99 |
| Fluorene | 2.6 | ND | > 99 |
| Naphthalene | 87.5 | 0.4 | > 99 |
| Phenanthrene | 12.3 | 0.1 | 99 |
| Pyrene | 15.9 | < 0.1 | > 99 |
| TOTAL | 151.1 | < 1.0 | > 99 |

| | | | |
|---|---|---|---|
| ND = not determinable | | | |

From the results indicated in the table, it can be observed that the treatment is capable of completely removing the organic contaminants.

## Claims

1. A process for the removal of organic pollutants from sediments **characterized by** a water content ranging from 5% to the saturation limit of the sediment and consisting of over 60%, with respect to the dry product, of particles with a particle-size lower than 63 µm, comprising the following steps:
(a) mixing of said sediment with a lipophile solvent selected from petroleum ether and ethyl acetate, said solvent being mixed in such a ratio as to form a single liquid phase with the water contained in the sediment;
(b) separation of the liquid phase from a solid phase;
(c) removal by evaporation of the residual solvent from the solid phase obtained in step (b);
(d) recovery by evaporation of the solvent from the liquid phase obtained in step (b).

2. The process according to claim 1, wherein the lipophile solvent is ethyl acetate.

3. The process according to claim 1, wherein the weight ratio between the sediment and the lipophile solvent ranges from 0.2 to 5.0.

4. The process according to claim 3, wherein the weight ratio between the sediment and the lipophile solvent ranges from 0.5 to 1.

5. The process according to claim 1, wherein in step (a) the mixing of the components is carried out at room temperature, for a time ranging from 10 to 60 minutes.

6. The process according to claim 1, wherein the separation in step (b) takes place by decanting. fine fraction.

7. The process according to claim 1, wherein in step (c) the removal of the solvent from the solid fraction is carried out at a temperature ranging from 60 to 100°C.

8. The process according to claim 7, wherein the temperature ranges from 70 to 90°C.

9. The process according to claim 1, wherein step (c) is carried out by means of a rotating drum drier, a screen drier or other devices of the commercial type.

10. The process according to claim 1, wherein the recovery of the solvent in step (d) is carried out by means of a fine film evaporator with scraped walls operating at atmospheric pressure or under slight depression.

11. The process according to claim 1, wherein steps (a) to (d) can be repeated several times.

12. The process according to claim 1, wherein the solvent recovered in step (d) is recycled to step (a).

13. The process according to claim 1, wherein the organic pollutants are aliphatic and aromatic hydrocarbons, polynuclear aromatic hydrocarbons, aliphatic and aromatic organo-chlorinated products, pesticides, dioxins and dibenzofurans.

## Patentansprüche

1. Verfahren zum Entfernen organischer Verunreinigungen von Sedimenten, welche durch einen Wassergehalt im Bereich von 5 % bis zu der Sättigungsgrenze des Sediments gekennzeichnet sind und, bezogen auf das trockene Pulver, zu mehr als 60 % aus Partikeln mit einer Partikelgröße von weniger als 63 µm bestehen, umfassend die nachfolgenden Schritte:
(a) Vermischen des Sediments mit einem lipophilen Lösemittel ausgewählt aus Petroleumether und Ethylacetat;
(b) Abtrennen der flüssigen Phase von einer Festphase;
(c) Entfernen des restlichen Lösemittels aus der in Schritt (b) erhaltenen Festphase durch Verdampfung;
(d) Wiedergewinnung des Lösemittels aus der in Schritt (b) erhaltenen flüssigen Phase durch Verdampfung.

2. Verfahren nach Anspruch 1, wobei das lipophile Lösemittel Ethylacetat ist.

3. Verfahren nach Anspruch 1, wobei das Gewichtsverhältnis zwischen dem Sediment und dem lipophilen Lösemittel im Bereich von 0,2 bis 5,0 liegt.

4. Verfahren nach Anspruch 3, wobei das Gewichtsverhältnis zwischen dem Sediment und dem lipophilen Lösemittel zwischen 0,5 und 1 liegt.

5. Verfahren nach Anspruch 1, wobei in Schritt (a) das Vermischen der Komponenten für eine Zeit im Bereich von 10 bis 60 Minuten bei Raumtemperatur durchgeführt wird.

6. Verfahren nach Anspruch 1, wobei die Abtrennung in Schritt (b) durch Dekantieren erfolgt.

7. Verfahren nach Anspruch 1, wobei in Schritt (c) das Entfernen des Lösemittels aus der festen Fraktion bei einer Temperatur im Bereich von 60 bis 100°C durchgeführt wird.

8. Verfahren nach Anspruch 7, wobei die Temperatur im Bereich von 70 bis 90°C liegt.

9. Verfahren nach Anspruch 1, wobei Schritt (c) mittels eines Rotationstrommeltrockners, eines Siebtrockners oder anderen Geräten vom kommerziellen Typ durchgeführt wird.

10. Verfahren nach Anspruch 1, wobei die Wiedergewinnung des Lösemittels in Schritt (d) mittels eines Feinfilmverdampfers mit geschabten Wänden, der bei atmosphärischem Druck oder unter leichtem Unterdruck betrieben wird, ausgeführt wird.

11. Verfahren nach Anspruch 1, wobei die Schritte (a) bis (d) mehrere Male wiederholt werden können.

12. Verfahren nach Anspruch 1, wobei das in Schritt (d) wiedergewonnene Lösemittel zu Schritt (a) zurückgeführt wird.

13. Verfahren nach Anspruch 1, wobei die organischen Verunreinigungen aliphatische und aromatische Kohlenwasserstoffe, polyzyklische aromatische Kohlenwasserstoffe, aliphatische und aromatische organochlorierte Produkte, Pestizide, Dioxine und Dibenzofurane sind.

## Revendications

1. Procédé d'élimination de contaminants organiques de sédiments **caractérisé par** une teneur en eau allant de 5% jusqu'à la limite de saturation du sédiment et composés à plus de 60%, ramené au produit sec, de particules ayant une granulométrie inférieure à 63 µm, comprenant les étapes consistant à :
(a) mélanger ledit sédiment avec un solvant lipophile choisi parmi l'éther de pétrole et l'acétate d'éthyle ;
(b) séparer la phase liquide d'avec une phase solide ;
(c) enlever par évaporation le solvant résiduel de la phase solide obtenue à l'étape (b) ;
(d) récupérer le solvant par évaporation à partir de la phase liquide obtenue à l'étape (b)

2. Procédé selon la revendication 1, dans lequel le solvant lipophile est l'acétate d'éthyle.

3. Procédé selon la revendication 1, dans lequel le ratio en poids du sédiment sur le solvant lipophile se situe dans la plage de 0,2 à 5,0.

4. Procédé selon la revendication 3, dans lequel le ratio en poids du sédiment sur le solvant lipophile se situe dans la plage de 0,5 à 1.

5. Procédé selon la revendication 1, dans lequel, à l'étape (a), le mélangeage des composants se fait à la température ambiante pendant une durée allant de 10 à 60 minutes.

6. Procédé selon la revendication 1, dans lequel, à l'étape (b), la séparation se fait par décantation.

7. Procédé selon la revendication 1, dans lequel, à l'étape (c), l'enlèvement du solvant de la fraction solide se fait à une température allant de 60 à 100°C.

8. Procédé selon la revendication 7, dans lequel la température va de 70 à 90°C.

9. Procédé selon la revendication 1, dans lequel l'étape (c) se fait au moyen d'un sécheur à tambour rotatif, d'un sécheur à grille ou d'autres dispositifs du commerce.

10. Procédé selon la revendication 1, dans lequel la récupération du solvant à l'étape (d) se fait au moyen d'un évaporateur à couche mince avec parois raclées qui fonctionne à la pression atmosphérique ou sous une pression légèrement négative.

11. Procédé selon la revendication 1, dans lequel les étapes (a) à (d) peuvent être répétées plusieurs fois.

12. Procédé selon la revendication 1, dans lequel le solvant récupéré à l'étape (d) est recyclé dans l'étape (a).

13. Procédé selon la revendication 1, dans lequel les contaminants organiques sont des hydrocarbures aliphatiques et aromatiques, des hydrocarbures aromatiques polynucléaires, des produits aliphatiques et aromatiques organochlorés, des pesticides, des dioxines et des dibenzofuranes.
